## Europäisches Patentamt
## European Patent Office
## Office européen des brevets

(11) Veröffentlichungsnummer: **0 174 556**
**B1**

(12) **EUROPÄISCHE PATENTSCHRIFT**

(45) Veröffentlichungstag der Patentschrift: 23.05.90

(51) Int. Cl.⁵: **G 06 F 15/40**

(21) Anmeldenummer: 85110862.1

(22) Anmeldetag: 29.08.85

(54) Suchverfahren für Speicheradressen und Adressvergleichsschaltung.

(30) Priorität: 12.09.84 CH 4349/84

(43) Veröffentlichungstag der Anmeldung:
19.03.86 Patentblatt 86/12

(45) Bekanntmachung des Hinweises auf die
Patenterteilung:
23.05.90 Patentblatt 90/21

(84) Benannte Vertragsstaaten:
CH DE FR GB LI NL SE

(56) Entgegenhaltungen:
IBM TECHNICAL DISCLOSURE BULLETIN, Band
21, Nr. 4, September 1978, Seiten 1669-1670,
New York, US; J.D. PETERSON: "Hashing for
disk file storage"

COMMUNICATIONS OF THE ACM, Band 14, Nr.
4, April 1971, Seiten 228-239, New York, US;
V.Y. LUM et al.: "Key-to-address transform
techniques"

(73) Patentinhaber: BBC Brown Boveri AG
Haselstrasse
CH-5401 Baden (CH)

(72) Erfinder: Züger, Stefan
Martinsbergstrasse 24
CH-5400 Baden (CH)

(56) Entgegenhaltungen:

COMMUNICATIONS OF THE ACM, Band 11, Nr.
1, Januar 1968, Seiten 35-38, New York, US;
W.D. MAURER: "An improved hash code for
scatter storage"

**EP 0 174 556 B1**

**Beschreibung**

Bei der Erfindung wird ausgegangen von einem Suchverfahren für in einer Adresstabelle abgelegte Werte bzw. Schlüssel oder Speicheradressen nach dem Oberbegriff es Patentansprüchs 1. Die Erfindung betrifft auch eine Adressenvergleichsschaltung zur Durchführung des Suchverfahrens.

Eine wichtige Aufgabenstellung der Informationsverarbeitung ist die Wiedergewinnung von gespeicherten Daten anhand eines Suchbegriffes über diese Daten. Eine System, das solche inhaltsbezogene Zugriffe ermöglicht, wird als assoziativer oder inhaltsadressierbarer Speicher (content addressable memory oder CAM) bezeichnet.

Bei konventionellen (Halbleiter-) Speichern erfolgt der Zugriff aufgrund einer Adressangabe, d.h. durch Angabe der Position des gewünschten Datums im Speicher. Auf dem Markt sind bischer nur wenige associative Speicher (CAM) als Bauelemente erhältlich. Ihr Speicherinhalt ist recht klein, so dass ihr Einsatz auf Spezialgebiete beschränkt bleibt.

Grössere assoziative Speicher werden mittels konventionelle Speicherelementen und einer zusätzlichen Wiedergewinnungseinheit, die die assoziative Zugriffsfunktion realisiert, aufgebaut. Die Wiedergewinnungseinheit durchsucht den Inhalt des Speichers nach dem vorgegebenen Schlüssel (Suchbegriff). Dabei sind vielfähltige Suchstrategien denkbar, die sich in Implementierungsaufwand und Zugriffszeit unterschieden. Als Wiedergewinnungseinheit kann eine spezialisierte Hardware oder ein entsprechend programmierter Rechner verwendet werden.

Die am weitesten verbreiteten Suchstrategien für Wiedergewinnungseinheiten nach dem Schlüssel-Transformations-Verfahren sind die sogenannten Streu- oder Hasch-Verfahren. Die Hasch-Verfahren bieten bei geringem Implementierungsaufwand eine sehr gute Effizienz. Die gewöhnlichen Hasch-Verfahren haben die Eigenschaft, dass der durchschnittliche Suchaufwand gering ist, dass aber im schlechtesten Fall die Suchzeit um ein Vielfaches über dem Durchschnitt liegt. Dieser Effekt erschwert die Anwendung von Hasch-Verfahren in Echtzeitsystemen erheblich, da in derartigen Systemen die strikte Einhaltung von Zeitbegingungen sichergestellt sein muss.

Es existiert aber eine Klasse von Hasch-Funtionen, die die oben angeführten Nachteile nicht aufweisen, nämlich die sogenannten perfekten Hasch-Funktionen, die für alle Fälle einen gleichbleibenden, sehr geringen Zugriffsaufwand garantieren, vgl. Communications of the ACM, Vol. 24, Dez. 1981, S. 829—833. Perfekte Hasch-Funktionen gewährleisten ein Wiederauffinden eines Schlüssels mit einer einzigen Sondierung, d.h. mit einem einzigen Zugriff.

Ist W eine Menge von Elementen aus dem Intervall X = [O . . . n], n grösstes Element von X, so bildet eine perfekte Schlüssel-Transformationsfunktion bzw. Hasch-Funktion h die Menge W eindeutig in ein Abbildintervall I = [O . . . m] von ganzen Zahlen ab, m grösstes Element von I. Die Elemente w von W werden unter Verwendung von h als Element-zu-Adresstransformation in einer Adresstabelle T mit fest vorgegebener Elementeanzahl m gespeichert. Für alle w aus W gilt:

$$T(h(w)) = w.$$

D.h., w ist genau dann in W enthalten, wenn an der Stelle bzw. an dem Tabellenindex $h(w)$ der Adresstabelle T der Wert w gefunden wird. Das Suchen eines Elementes w in der Adresstabelle T erfordert somit eine Berechnung der Funktion h und eine Vergleichsoperation.

Die Berechnung der Hasch-Funktion $h(w)$ erfolgt mittels Hasch-Funktionstabellen. Mit einer unzerlegten, direkten Anordnung der Funktion (w) in einem Speicher als Hasch-Funktionstabelle ist bei binärer Codierung ein Speicher der Grösse

$$C_d = n \cdot \lceil \log_2 m \rceil$$

Bit notwendig. $\lceil \log_2 m \rceil$ bedeutet die kleinste ganze Zahl grösser oder gleich $\log_2 m$. Diese direkte Anordnung bedingt bei heutiger Technologie für $n > 10^5$ sehr aufwendige Speicher. Zudem ist die Speicherausnutzung gering, da in typischen Anwendungen von assoziativen Speichern davon ausgegangen wird, dass $n \gg m$ ist.

Mit dem Oberbegriff nimmt die Erfindung auf einen Stand der Technik von Suchverfahren Bezug, wie er in Communications of the ACM, Vol. 24 (1981) S. 829—833 beschrieben ist. Dort werden 2 Algorithmen zur Berechnung perfekter Hasch-Funktionen angegeben, die primär für die Implementierung in Software auf einem leistungsfähigen Rechner entworfen sind. Für eine Implementierung in Hardware sind diese Funktionen nur bedingt geeignet, da deren Berechnung u.a. Multiplikationen und Divisionen erfordert.

Die Implementierung von diskreten Funktionen (Hasch-Funktionen gehören in diese Klasse) in Hardware kann einfach und effizient mittels Funktionstabellen erfolgen, vgl. IEEE Transactions on Computers, Vol. 27 (1980) S. 931—934. Diese Tabellen können in hochintegrierten preisgünstigen Halbleiterspeichern abgelegt werden.

Derartige Suchverfahren für Speicheradressen und Adressenvergleichsschaltungen können z.B. bei einem Text-Editor Anwendung finden, wo eine Zeile mit einem bestimmten Identifier gesucht wird, wo also nicht nur das Vorkommen eines Elementes, sondern auch noch dessen Stelle interessant ist. In verteilten Steuer- und Regel- bzw. Leittechniksystemen, die nach dem Prinzip der Quellenadressierung arbeiten,

2

werden ebenfalls assoziative Empfängerschaltungen benötigt, vgl. z.B. die CH—PS 632 365. Dort ist ein Datenaustauschverfahren zwischen mehreren Teilnehmern bzw. Partnern und deren Prozessoren angegeben, bei denen für zu übertragende Nutz-Nachrichten ausser diesen eine Absenderadresse, aber keine Empfängeradresse übertragen wird. Alle aktiven Teilnehmer entscheiden anhand der Absenderadresse und des Datentyps, ob die Nutz-Nachricht für sie von Interesse ist. Dazu müssen sie diese Absenderadresse mit mindestens einer in einer Tabelle gespeicherten Adresse vergleichen.

In künftigen sehr schnellen Uebertragungssystemen müssen entsprechend leistungsfähige assoziative Empfängerschaltungen eingesetzt werden. Bei Uebertragungsraten von 10 MHz—100 MHz werden in den Empfängern assoziative Speicher der Grössenordnung $100 \cdot 24$ bit ... $5000 \cdot 24$ bit mit einer Zugriffszeit im Bereich von 1 µs ... 10 µs benötigt.

Die Erfindung, wie sie in den Patentansprüchen 1 und 4 definiert ist, löst die Aufgabe, ein Suchverfahren für Speicheradressen und eine Adressenvergleichsschaltung anzugeben, die ein schnelleres Suchergebnis für in einer Adresstabelle abgelegte Werte liefern und eine preisgünstigere Realisierung in Hardware ermöglichen.

Ein Vorteil der Erfindung besteht darin, dass die Arbeitsgeschwindigkeit eines quellenadressierten Systems um einen Faktor 20 ... 100 angehoben werden kann. Die Adressenvergleichsschaltung lässt sich mit wenigen im Handel erhältlichen Bauelementen realisieren. Durch eine Zerlegung der Hasch-Funktionstabelle h in mehrere Teilfunktionen $h_{ij}$ lässt sich deren Grösse reduzieren, so dass weniger Speicherplatz benötigt wird.

Die Erfindung wird nachstehend anhand eines Ausführungsbeispiels erläutert. Es zeigen:

Fig. 1 eine Adressenvergleichsschaltung mit einem assoziativen Speicher,

Fig. 2 eine Belegung des assoziativen Speichers gemäss Fig. 1,

Fig. 3 eine Bit-Darstellung einer Adresse im assoziativen Speicher gemäss Fig. 1 und

Fig. 4 bis 7 ein Flussdiagramm eines Algorithmus zur Bestimmung einer Hasch-Funktionstabelle und der Adresstabelle, die zusammen mit der Hasch-Funktionstabelle in dem assoziativen Speicher gemäss Fig. 1 gespeichert sind.

Bei dem erfindungsgemässen Suchverfahren wird ein auf Vorhandensein in einer Adresstabelle T zu prüfendes Schlüsselelement bzw. ein Suchschlüssel w in ein Polynom der Form

$$w = \sum_{i=0}^{k} w_i \, p^i \qquad\qquad 0 \leq w_i < p$$

zerlegt, i = Laufvariable, k = grösster Wert von i, $w_i$ = Polynomkoeffizient, p = freie Variable. Die Zerlegung von w kann in digitalen Schaltungen sehr einfach realisiert werden, wenn p als eine Potenz von 2 gewählt wird.

Die in Teilfunktionen $h_{ij}$ zerlegte Funktion h ist definiert durch die Rekursion

$$h(w) = h_k(w) = h_{k1}(w_k) + h_{10}(h_{k-1}(w)) \qquad\qquad (\mathrm{mod}\ p),$$

$$h_1(w) = h_{11}(w_1) + h_{10}(w_0) \qquad\qquad (\mathrm{mod}\ p).$$

Für diese neuformulierte Definition von h muss zusätzlich die Bedingung $p \geqq m$ erfüllt sein.

Jede Teilfunktion $h_{ij}$ kann mittels einer Hasch-Funktionstabelle der Grösse

$$C_{ij} = p \cdot \lceil \log_2 m \rceil$$

berechnet werden. Der Umfang aller Tabellen $h_{ij}$ zusammen ist somit

$$C_z = 2 \cdot k \cdot p \cdot \lceil \log_2 m \rceil$$

Verglichen mit dem Speicherbedarf $C_d$ für die direkte Implementierung ist der Aufwand $C_z$ nach der Zerlegung von h erheblich geringer. Für k = 2, n = 16777215 = $2^{24}-1$ und p = 256 = $2^8$ ist beispielsweise

$$C_d = 16777215 \cdot \lceil \log_2 m \rceil \ \text{und}$$

$$C_z = 4 \cdot 256 \lfloor \log_2 m \lceil = 1024 \rceil \log_2 m \rfloor.$$

Die Berechnung der rekursiv definierten Funktion h erfolgt durch den iterativen Algorithmus

$$h := (h_{11}(w_1) + h_{10}(w_0)) \qquad\qquad \mathrm{mod}\ p,$$

$$\text{for } i := 2 \text{ to } k \text{ do } h := (h_{i1}(w_i) + h_{i0}(h)) \qquad\qquad \mathrm{mod}\ p.$$

In einem zweiten Schritt wird der Vergleich w = T(h(w)) durchgeführt. Um den Realisierungsaufwand zu vermindern, erfolgt der Vergleich sequentiell nach dem Algorithmus

$$r: = \text{true},$$

$$\text{for } i: = 0 \text{ to } k \text{ do } r: = r \text{ and } (w_i = T_i(h)).$$

Ist der Wert r nach der Ausführung true, so ist w an der Stelle h in der Adresstabelle T enthalten. Ist r = false, so ist w nicht in T enthalten.

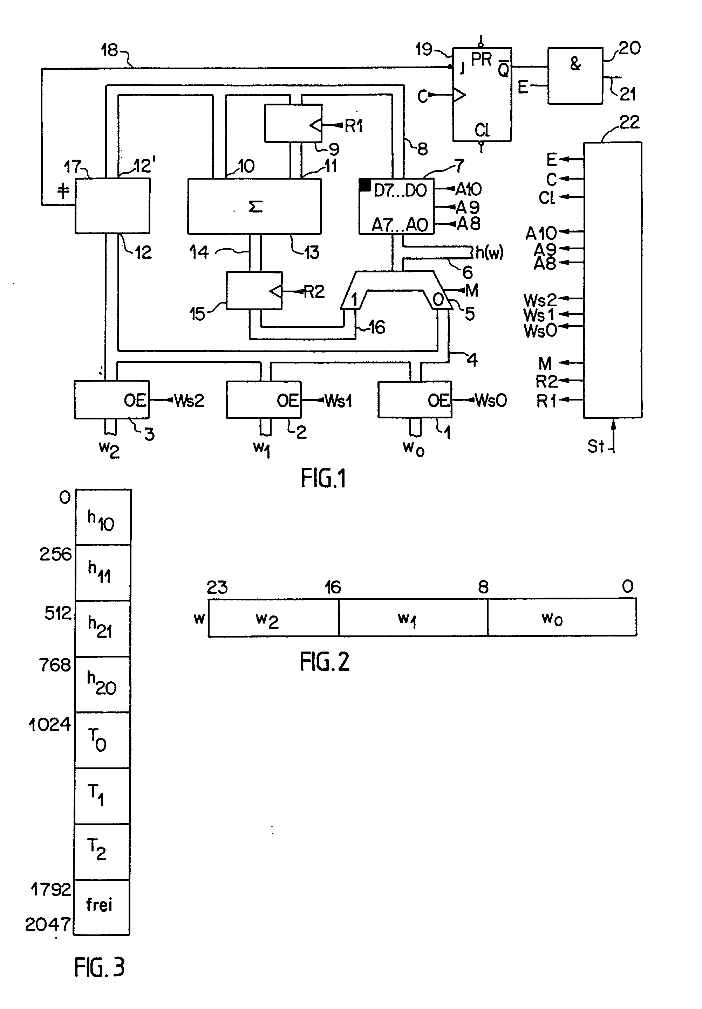

In Fig. 1 ist ein Schaltschema für eine Hardwarerealisierung dieser Algorithmen angegeben. Für diese Schaltung sind die Parameter $p = 2^8 = 256$, $n = 2^{24} = 256^6$ und $m \leq 256$ gewählt worden. Alle Schaltungselemente (inklusive der Signalleitungen bzw. Busse) haben mit diesen Parametern die Breite 8 bit. Bei einer anderen Wahl der Parameter kann die Schaltung problemlos angepasst werden.

Der Suchschlüssel w mit einer Länge von 24 bit wird gemäss Fig. 2 in drei gleichlange Teile $w_0$, $w_1$ und $w_2$ zerlegt. Die Bitstellen 0 bis 7 von w werden als Polynomkoeffizienten-Signal $w_0$ eingangsseitig einem Zwischenspeicher oder Latch 1 zugeführt. Die Bitstellen 8 bis 15 von w werden als Polynomkoeffizienten-Signal $w_1$ eingangsseitig einem Zwischenspeicher oder Latch 2 zugeführt. Die Bitstellen 16 bis 23 von w werden als Polynomkoeffizienten-Signal $w_2$ eingangsseitig einem Zwischenspeicher oder Latch 3 zugeführt. Die Zwischenspeicher 1 bis 3 stehen ausgangsseitig über einen Polynomkoeffizienten-Bus 4 einerseits mit einem "0"-Eingang eines Multiplexors 5 und andererseits mit einem ersten Eingang 12 eines Vergleichers 17 in Verbindung. Die Zwischenspeicher 1 bis 3 werden durch Ausgabefreigabe-Signale Ws0, Ws1, Ws2 gesteuert, welche von einem Steuerwerk 22 geliefert werden. Ein "1"-Eingang des Multiplexors 5 ist über einen Bus 16 mit dem Ausgang eines Summenregisters 15 verbunden.

Der Ausgang des Multiplexors 5 ist über einen Multiplexor-Ausgangsbus 6, an dem am Ende des Suchverfahrens die Hasch-Funktion h(w) abgreifbar ist, mit Adresseingängen A0 . . . A7 eines Speichers 7 verbunden. Ueber einen Auswahleingang M, der mit dem Steuerwerk 22 in Verbindung steht, ist der Multiplexor 5 eingangsseitig umschaltbar.

Der assoziative Speicher 7 ist über Steuereingänge A8, A9 und A10 durch das Steuerwerk 22 steuerbar. Ueber Adressausgänge D0 . . . D7 und einen Speicherausgangsbus 8 steht der Speicher 7 mit dem Eingang eines Addendenregisters 9, einem ersten Eingang 10 eines Addiergliedes 13 und einem zweiten Eingang 12' des Vergleichers 17 in Verbindung. Als Speicher 7 kann ein Speicher in NMOS-Technologie verwendet werden, wie er in: Component Data Catalog der USA-Firma Intel, 1982, S. 2—1 bis 2—8 beschrieben ist.

Der Ausgang des Addendenregisters 9 ist mit einem 2. Eingang 11 des Addiergliedes 13 verbunden. Der Ausgang des Addiergliedes 13 steht über einen Addiergliedausgangsbus 14 mit dem Eingang des Summenregisters 15 in Verbindung. Das Addendenregister 9 ist über einen Takteingang R1 und das Summenregister 15 über einen Takteingang R2 durch das Steuerwerk 22 steuerbar. Bei Eintreffen eines Taktimpulses am Takteingang R1 bzw. R2 wird das eingangsseitig am Addendenregister 9 bzw. am Summenregister 15 anstehende Signal im jeweiligen Register gespeichert, gleichzeitig steht es ausgangsseitig am jeweiligen Register zum Abgriff zur Verfügung.

Der Vergleicher 17 ist ausgangsseitig mit einem J-Eingang eines flankengetriggerten JK-Flip-Flops 19 mit negiertem Löscheingang C1 verbunden. Der Löscheingang C1 und ein Taktsignaleingang C des JK-Flip-Flops 19 sind mit dem Steuerwerk 22 verbunden. Ein geeignetes JK-Flip-Flop der TTL-Bausteinfamilie ist unter der Typenbezeichnung 74 LS 109 aus dem Buch "The TTL Data Book for Design Engineers", 1976, S. 5—33 der Firma Texas Instruments bekannt, wobei nur die Hälfte des bekannten Bausteins benötigt wird und der nicht benötigte Preset-Eingang PR auf logisch "1" gesetzt werden muss, um das gewünschte Verhalten zu erreichen. Ein UND-Glied 20 ist eingangsseitig einerseits an den $\overline{Q}$-Ausgang des JK-Flip-Flops 19 und andererseits an einen Endesignal-Ausgang E des Steuerwerks 22 angeschlossen. Am UND-Glied-Ausgang 21 liegt nur dann ein "1"-Signal an, wenn der Vergleicher 17 am Ende des Vergleichsvorganges Gleichheit seiner Eingangssignale feststellt, d.h., wenn der Suchschlüssel w im Speicher 7 gespeichert ist.

Die Funktion des Steuerwerks ist in Tabelle 1 spezifiziert. Die Implementierung ist unkritisch und kann beispielsweise mit einem binären Zähler und einem nachgeschalteten Dekodierer für die Erzeugung der einzelnen Steuersignale erfolgen. St bezeichnet einen Startsignaleingang des Steuerwerks 22.

## Tabelle 1

| Schritt | R1 | R2 | M | $w_{s2}..w_{s0}$ | $A_{10}..A_8$ | $\overline{\text{FF-Clear}}$ C1 | Clock C | Ende E |
|---------|----|----|----|----|----|----|----|----|
| 1 | 0 | 0 | 0 | 001 | 000 | X | X | 0 |
| 2 | 1 | 0 | 0 | 010 | 001 | X | X | 0 |
| 3 | 0 | 1 | 0 | 100 | 010 | X | X | 0 |
| 4 | 1 | 0 | 1 | XXX | 011 | X | X | 0 |
| 5 | 0 | 1 | 1 | 001 | 100 | 0 | X | 0 |
| 6 | 0 | 0 | 1 | 010 | 101 | 1 | ↑ | 0 |
| 7 | 0 | 0 | 1 | 100 | 110 | 1 | ↑ | 0 |
| 8 | 0 | 0 | 1 | XXX | XXX | 1 | ↑ | 1 |

In der Tabelle 1 bedeuten: X einen irrelevanten Zustand, FF-Clear das Löscheingangssignal C1 von 22, Clock das Taktsignal C von 22 und Ende das Endesignal E von 22. Der Einfachheit halber werden für Signal und Signaleingang bzw. -ausgang dieselben Bezeichnungen verwendet.

Die Pfeile in der Clock-Spalte zeigen an, dass das Taktsignal C unmittelbar zu Beginn des jeweiligen Schrittes von 0 auf 1 wechselt. Die Werte 000 bis 110 in der Spalte $A_{10}..A_8$ adressieren nacheinander im Speicher 7 die Speicherbereiche, in denen die Hasch-Teilfunktionen $h_{10}$, $h_{11}$, $h_{21}$, $h_{20}$ und die Adress-Teiltabellen $T_0$, $T_1$ und $T_2$ gespeichert sind.

Die Organisation des Speichers ist in Fig. 3 gezeigt. Der Speicher wird gleichzeitig für die Hasch-Funktionstabellen $h_{xy}$ und die Adresstabelle T benutzt. Mit den gewählten Parametern muss dieser mindestens die Grösse $1792 \cdot 8$ bit aufweisen; in der Praxis wird ein Speicher von $2048 \cdot 8$ bit gewählt.

Nach dem Anlegen des Suchschlüssels w an die Zwischenspeicher 1 bis 3 und dem Befehl "Start-Vergleich" am Startsignaleingang St von 22 führt das Steuerwerk 22 die Schritte 1 bis 8 aus, entsprechend Tabelle 1. Während des Schrittes 8 zeigt ein "1"-Signal am UND-Glied-Ausgang 21 an, dass w in der Adresstabelle T enthalten ist. Am Multiplexor-Augangsbus 6 ist das Resultat der Berechnung der Hasch-Funktion h(w) abgreifbar, entsprechend der Speicherstelle der Adresstabelle T, an welcher ein dem Suchschlüssel w gleiches Datum gespeichert ist.

Die maximale Arbeitsgeschwindigkeit der Adressenvergleichsschaltung ist bei Verwendung von Standardbauelementen wesentlich durch die Zugriffszeit des verwendeten Speicherbausteines bestimmt. Bei einem Aufbau des Multiplexors 5, des Addiergliedes 13, der Register 9 und 15, des Vergleichers 17 und des JK-Flip-Flops 19 mit LS-TTL-Bausteinen und bei einem Speicher mit einer Zugriffszeit von 200 ns werden für einen assoziativen Zugriff um die 2 ms benötigt. Bei Verwendung von schnellen Bauelementen (AS-TTL) und einem Speicher mit einer Zugriffszeit von 50 ns kann die für einen assoziativen Zugriff benötigte Zeit auf 600 ns gesenkt werden.

Das Suchverfahren des perfekten Hashing und die Funktionsweise der zugehörigen Adressenvergleichsschaltung soll an dem folgenden Beispiel verdeutlicht werden. In Tabelle 2 ist eine gewählte Schlüsselmenge W angegeben, welche die Ausgangsbasis für die Berechnung der Tabellen h und T ist.

Die der Schlüsselmenge W gemäss Tabelle 2 zugeordnete Hasch-Funktionstabelle $h_{10}$, $h_{11}$, $h_{20}$, $h_{21}$ ist in Tabelle 3 wiedergegeben und die Adresstabelle T mit Adress-Teiltabellen $T_0$, $T_1$, $T_2$ in Tabelle 4. Der einfacheren Darstellung wegen ist die Zahl der Einträge in der Schlüsseltabelle auf 12 (T(0) bis T(11)) beschränkt worden. Die übrigen Elemente T(12) bis T(255) werden nicht benutzt und sind Null gesetzt. Ebenfalls aus Gründen einer einfachen Darstellung ist die Schlüsselmenge so gewählt, dass nur bei Elementen im Bereich von 0 bis 24 der Tabellen $h_{xy}$ der Eintrag von Null verschieden ist.

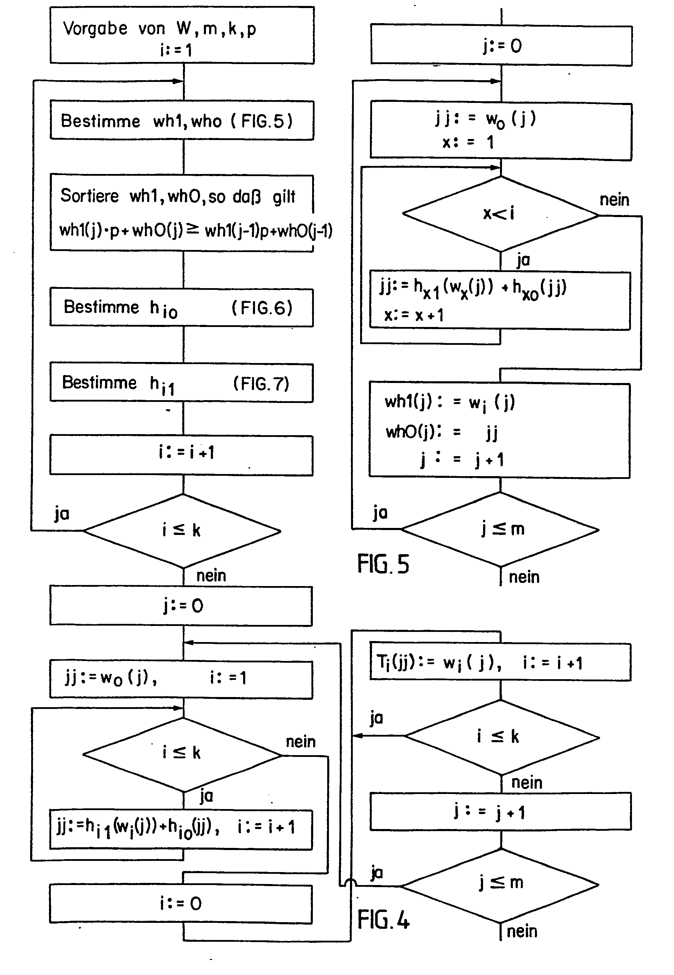

Ein Flussdiagramm eines möglichen Algorithmus zur Bestimmung der Tabellen $h_{xy}$ und $T_x$ ist in den Fig. 4—7 dargestellt. Ziel des Algorithmus ist die Bestimmung der Tabelleninhalte von $T_x$ und $h_{xy}$, so dass für alle m Elemente der vorgegebenen Schlüsselmenge W die Bedingung

$$T(h(w(i))) = w(i)$$

erfüllt ist, die das perfekte Hasch-Verfahren charakterisiert.

5

EP 0 174 556 B1

## Tabelle 2:

### Schlüsselmenge W

| i | w |
|---|---|
| 0 | 851977 |
| 1 | 1114124 |
| 2 | 1572876 |
| 3 | 857097 |
| 4 | 726025 |
| 5 | 398336 |
| 6 | 66565 |
| 7 | 132099 |
| 8 | 984082 |
| 9 | 1117952 |
| 10 | 1245710 |
| 11 | 1379853 |

## Tabelle 4:

### Adress-Tabelle T und Zerlegung in Teiltabellen $T_0$, $T_1$, $T_2$

| i | T | $T_0$ | $T_1$ | $T_2$ |
|---|---|---|---|---|
| 0 | 66565 | 5 | 4 | 1 |
| 1 | 132099 | 3 | 4 | 2 |
| 2 | 398336 | 0 | 20 | 6 |
| 3 | 726025 | 9 | 20 | 11 |
| 4 | 851977 | 9 | 0 | 13 |
| 5 | 857097 | 9 | 20 | 13 |
| 6 | 984082 | 18 | 4 | 15 |
| 7 | 1114124 | 12 | 0 | 17 |
| 8 | 1117952 | 0 | 15 | 17 |
| 9 | 1245710 | 14 | 2 | 19 |
| 10 | 1379853 | 13 | 14 | 21 |
| 11 | 1572876 | 12 | 0 | 24 |
| 12 | 0 | 0 | 0 | 0 |

Für i = 13 ... 255
sind die Werte der Adresstabelle T = O

## Tabelle 3:

### Hasch-Funktionstabelle $h_{10}$, $h_{11}$, $h_{20}$, $h_{21}$

| i | $h_{10}$ | $h_{11}$ | $h_{20}$ | $h_{21}$ |
|---|---|---|---|---|
| 0 | 0 | 0 | 0 | 0 |
| 1 | 0 | 0 | 0 | 0 |
| 2 | 0 | 2 | 0 | 1 |
| 3 | 0 | 0 | 0 | 0 |
| 4 | 0 | 3 | 0 | 0 |
| 5 | 1 | 0 | 0 | 0 |
| 6 | 0 | 0 | 0 | 2 |
| 7 | 0 | 0 | 1 | 0 |
| 8 | 0 | 0 | 0 | 0 |
| 9 | 1 | 0 | 1 | 0 |
| 10 | 0 | 0 | 0 | 0 |
| 11 | 0 | 0 | 0 | 2 |
| 12 | 0 | 0 | 0 | 0 |
| 13 | 0 | 0 | 0 | 4 |
| 14 | 0 | 6 | 0 | 0 |
| 15 | 0 | 7 | 0 | 6 |
| 16 | 0 | 0 | 0 | 0 |
| 17 | 0 | 0 | 0 | 7 |
| 18 | 2 | 0 | 0 | 0 |
| 19 | 0 | 0 | 0 | 9 |
| 20 | 0 | 8 | 0 | 0 |
| 21 | 0 | 0 | 0 | 10 |
| 22 | 0 | 0 | 0 | 0 |
| 23 | 0 | 0 | 0 | 0 |
| 24 | 0 | 0 | 0 | 11 |

Für i = 25 ... 255 sind alle
Werte $h_{xy}$ = O

6

Fig. 4 gibt den Ueberblick des Ablaufs einer Berechnung an. Die Schlüsselmenge W mit den Abschnitten bzw. Polynomkoeffizienten $w_0$, $w_1$ und $w_2$ gemäss Fig. 2, die Anzahl Elemente m von W, sowie die Parameter p und k der verwendeten Hardware-Schaltung werden vorgegeben. Das Programm berechnet zuerst iterativ die Tabellen $h_{i1}$ und $h_{i0}$ für i von 1 bis k. Für die Berechnung werden die Hilfstabellen wh1 und wh0 angelegt, die den entsprechenden Ausschnitt von W in einer geeigneten Form enthalten.

In Fig. 5 ist die Berechnung von wh0 und wh1 dargestellt. Die Werte von wh0 berechnen sinch aus dem bereits bestimmten Teil der Hasch-Funktion $h_i(w)$; in wh1 wird $w_i$ kopiert. In einem nächsten Schritt werden die Hilfstabellen wh1 und wh0 sortiert, so dass gilt

$$wh1(j) \cdot p + wh0(j) \geqq wh1(j-1) \cdot p + wh0(j-1), \quad 1 \leqq j \leqq m.$$

Der Sortiervorgang ist nicht im Detail dargestellt; es wird auf die entsprechende Literatur (z.B. N. Wirth, Algorithmen und Datenstrukturen, Teubner 1979) verwiesen.

Die Grössen h0, h1, wh0 und wh1 werden nur als Hilfsfunktionen bei der Berechnung der Tabellen $h_{xy}$ gebraucht; sie treten an anderen Stellen und insbesondere in der Hardware-Schaltung nicht auf.

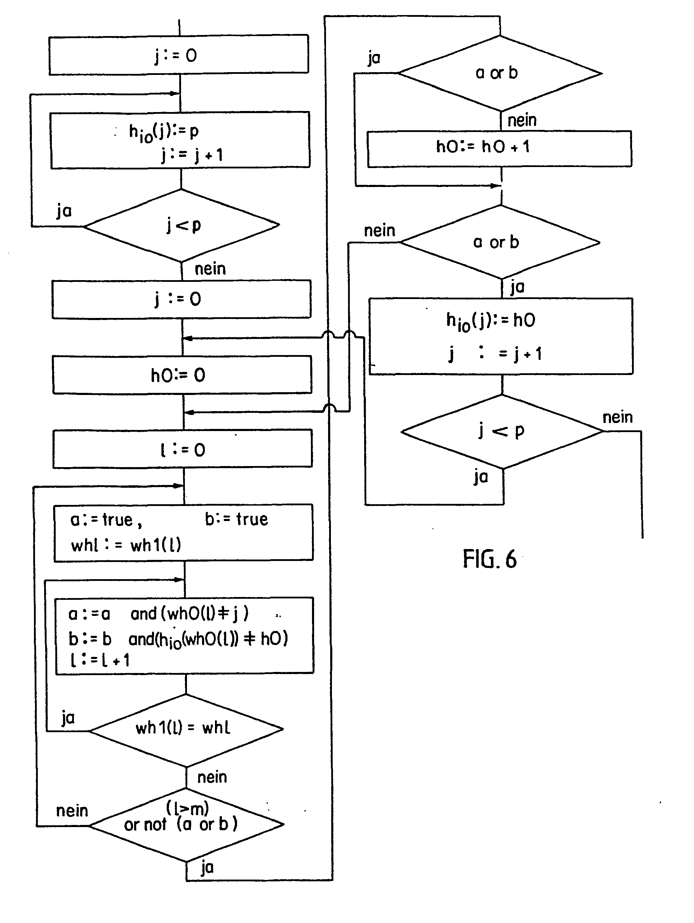

In Fig. 6 ist die Berechnung der Tabelle $h_{i0}$ dargestellt. Zuerst werden alle Tabellenwerte mit p initialisiert. Mit dem ersten Eintrag (Position 0) beginnend werden der Reihe nach die einzelnen Werte bestimmt. Für die Bestimmung jedes Tabellenwertes $h_{i0}(j)$ werden — ausgehend von 0 — die möglichen Werte (der jeweils aktuelle Wert wird durch h0 repräsentiert) der Reihe nach auf Konflikte mit den bisher festgelegten Tabellenwerten ($h_{i0}$ (0 . . . j-1)) untersucht. Ein Konflikt tritt auf, falls die Ungleichung

$$(h_{i0}(wh0(x)) \neq h_{i0}(wh0(y))) \text{ or } (wh1(x) \neq wh1(y)), \quad x \neq y$$

nicht erfüllt ist. Für den Test auf Konflikte wird die Ordnung der Tabellen wh1 und wh0 genutzt, indem davon ausgegangen werden kann, dass alle Elemente mit dem gleichen Wert wh1(j) unmittelbar hintereinander liegen. Im Falle eines Konflikts wird h0 um eins erhöht und erneut für alle m Einträge von wh1 und wh0 getestet. Tritt kein Konflikt auf, so wird der gefundene Wert an der Stelle j in der Tabelle $h_{i0}$ eingetragen.

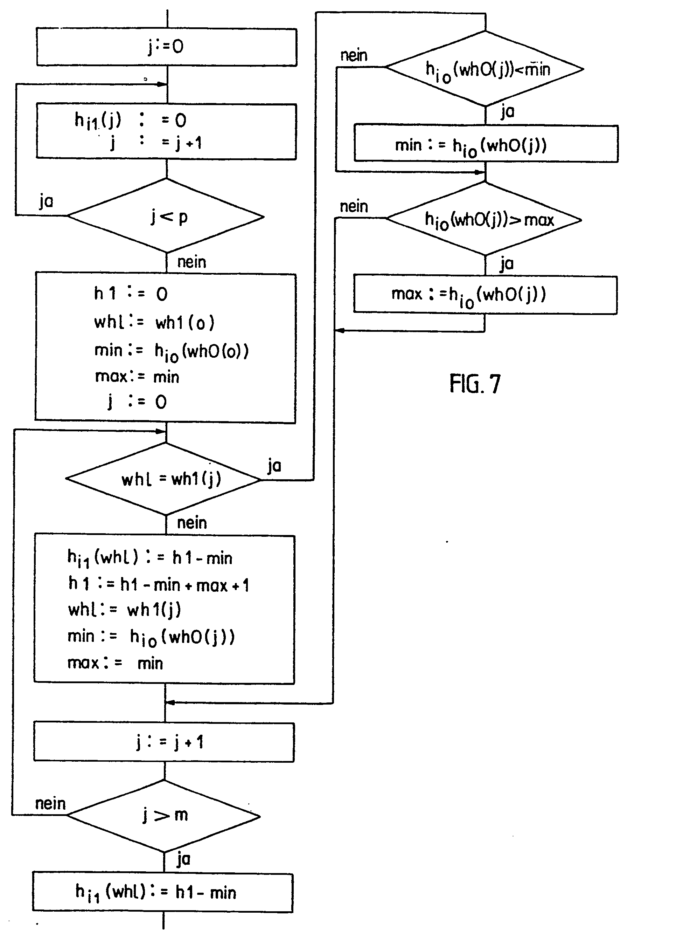

Die Bestimmung der Tabellen $h_{i1}$ erfolgt nach dem Flussdiagramm von Fig. 7. Zuerst wird die Tabelle mit 0 initialisiert. Die einzelnen Werte $h_{i1}$ (wh1(j)) werden der Reihe nach für die einzelnen Elemente festgelegt. Dafür wird die geordnete Struktur von wh1, wh0 ausgenutzt. Für alle wh1(x) mit jeweils gleichem Wert, die aufgrund der Ordnung unmittelbar hintereinander folgen, wird das Minimum und Maximum der entsprechenden Werte $h_{i0}(wh0(x))$ bestimmt (Variablen min bzw. max). Der entsprechende Tabelleneintrag berechnet sich nach

$$h_{i1}(wh1(j)) = h1 - min.$$

Für j = 0 ist h1 = 0, andernfalls wird h1 nach der Zuweisung des Tabellenwertes auf

$$h1 = h_{i1}(wh1(j)) - min + max + 1$$

gesetzt.

Die Berechnung der Tabellen $T_x$ erfolgt entsprechend der Ausgangsgleichung für das perfekte Hasch-Verfahren

$$T(h(w(i))) = w(i)$$

Die Bestimmung der einzelnen Teiltabellen $T_x$ erfolgt entsprechend dem hinteren Teil des Flussdiagramms von Figur 4 ab j: = 0. Für alle m Elemente wird die Gleichung

$$T_j(h(w(i))) = w_j(i)$$

für j = 0 . . . k ausgewertet. Die Adresstabelle (T) weist Teiltabellen ($T_0$, $T_1$, $T_2$, . . .) auf, wobei jede Teiltabelle gemäß

$$T = \sum_{i=0}^{k} T_i \, p^i, \quad \text{mit} \quad 0 \leq T_i < p,$$

gebildete Polynomkoeffizienten ($T_i$) mit gleicher Laufvariablen (i) enthält.

Beispiel 1

Eingabe Suchschlüssel w: 851977

Zerlegung von w in $w_0$ . . . $w_2$: $w_0 = 9$, $w_1 = 0$, $w_2 = 13$

Berechnung der Hasch-Funktion h(w):

Schritt 1, s. Tabelle 1: Wegen WsO = 1 gelangt das Polynomkoeffizienten-Signal $w_0 = 9$ vom Zwischenspeicher 1 über den Polynomkoeffizienten-Bus 4, über den Multiplexor 5 in "0"-Stellung und den multiplexor-Ausgangsbus 6 and die Adresseingänge A0 . . . A7 des Speichers 7. Aufgrund des Signals 000 an den Steuereingängen A8, A9 und A10 erscheint an den Adressausgängen D0 . . . D7 des Speichers 7 das Signal $h_{i0}(w_0) = h_{i0}(9) = 1$, s. Tabelle 3.

7

Schritt 2: Am Takteingang R1 des Addendenregisters 9 liegt ein "1"-signal an, welches die Speicherung seines eingangsseitig anliegenden Signals $h_{10}(9) = 1$ bewirkt. $h_{10}(9) = 1$ liegt nun auch am 2. Eingang 11 von 13 an. Wegen Wsl = 1 gelangt das Polynomkoeffizienten-Signal $w_1 = 0$ vom Zwischenspeicher 2 über den Bus 4, den Multiplexor 5 und den Bus 6 an die Adresseingänge A0 ... A7 des Speichers 7. Aufgrund des Steuersignals 001 an A8 ... A10 erscheint an den Adressausgängen D0 ... D7 von 7 das Signal $h_{11}(w_1) = h_{11}(0) = 0$. Am Ausgang des Addiergliedes 13 erscheint das Signal $h_1(w) = h_{11}(w_1) + h_{10}(w_0) = 0 + 1 = 1$.

Schritt 3: am Takteingang R2 des Summenregisters 15 liegt ein "1"-Signal an, welches die Speicherung seines eingangsseitig anliegenden Signals $h_1(w) = 1$ bewirkt, wodurch dieses Signal ausgangsseitig an 15 zur Verfügung steht. Wegen Ws2 = 1 gelangt das Polynomkoeffizienten-Signal $w_2 = 13$ vom Zwischenpeicher 3 über den Bus 4, den Multiplexor 5 und den Bus 6 an die Adresseingänge A0 ... A7 des Speichers 7. Auf Grund des Steuersignals 010 an A8, A9, A10 erscheint an den Adressausgängen D0 ... D7 von 7 das Signal $h_{21}(w_2) = h_{21}(13) = 4$, s. Tabelle 3.

Schritt 4: Wegen R1 = "1" wird $h_{21}(w_2) = 4$ im Addendenregister 9 gespeichert, wodurch dieser Wert am 2. Eingang 11 des Addiergliedes 13 anliegt. Wegen M = "1" gelangt das Ausgangssignal $h_1(w) = 1$ des Summenregisters 15 über den Bus 16, den Multiplexor 5 und den Bus 6 an die Adresseingänge A0 ... A7 des Speichers 7. Auf Grund des Steuersignals 011 an A8, A9, A10 erscheint an den Adressausgängen D0 ... D7 von 7 das Signal $h_{20}(h_1) = h_{20}(h_{11} + h_{10}) = h_{20}(1) = 0$, s. Tabelle 3. Am Ausgang des Addiergliedes 13 erscheint die Grösse $h(w) = h_{21}(w_2) + h_{20}(h_1) = 4 + 0 = 4$.

Vergleich T(h(w)) = w:

Schritt 5: Mit dem Signal C1 = "0" wird das JK-Flip-Flop 19 gelöscht bzw. zurückgesetzt. Wegen R2 = "1" wird $h(w) = 4$ im Summenregister 15 gespeichert und ausgangsseitig an 15 zur Verfügung gestellt. Wegen M = "1" erscheint $h(w) = 4$ an den Adresseingängen A0 ... A7 des Speichers 7. Auf Grund des Steuersignals 100 an A8, A9, A10 steht an den Adressausgängen D0 ... D7 von 7, am Bus 8 und am 2. Eingang 12' des Vergleichers 17 das Signal $T_0(4) = 9$ an. Infolge Ws0 = "1" liegt über den Zwischenspeicher 1 und den Bus 4 am 1. Eingang 12 des Vergleichers 17 das Polynomkoeffizienten-Signal $w_0 = 9$ an und am negierten Ausgang von 17, an der Vergleicherausgangsignalleitung 18 und am J-Eingang des JK-Flip-Flops 19 ein "0"-Signal, entsprechend "Gleichheit" der zu vergleichenden Signale.

Schritt 6: Mit dem Taktsignal C = " ↑ " am JK-Flip-Flop 19 wird, infolge des Signals "0" an dessen J-Eingang, der $\overline{Q}$-Ausgang von 19 auf "1" gesetzt. Wegen R2 = "0" und M = "1" steht am Ausgang des Multiplexors 5 noch das Signal $h(w) = 4$ an. Auf Grund des Steuersignals 101 an A8 ... A10 erscheint an den Adressausgängen D0 ... D7 des Speichers 7 und am 2. Eingang 12' des Vergleichers 17 das Signal $T_1(4) = 0$, s. Tabelle 3. Infolge Ws1 = "1" liegt über den Zwischenspeicher 2 und den Bus 4 am 1. Eingang 12 des Vergleichers 17 das Polynomkoeffizienten-Signal $w_1 = 0$ an und am Ausgang von 17 ein "0"-Signal, entsprechend "Gleichheit" der zu vergleichenden Signale.

Schritt 7: Mit C1 = "1" und C = " ↑ " bleibt das $\overline{Q}$-Ausgangssignal des JK-Flip-Flops 19 unverändert auf "1". Wegen R2 = "0" und M = "1" steht am Adresseingang A0 ... A7 des Speichers 7 unverändert das Signal $h(w) = 4$ an. Auf Grund des Steuersignals 110 an A8 ... A10 erscheint an den Adressausgängen D0 ... D7 des Speichers 7 und am 2. Eingang 12' des Vergleichers 17 das Signal $T_2(4) = 13$, s. Tabelle 3. Infolge Ws2 = "1" liegt über den Zwischenspeicher 3 und den Bus 4 am 1. Eingang 12 des Vergleichers 17 das Polynomkoeffizienten-Signal $w_2 = 13$ an, und am Ausgang von 17 ein "0"-Signal, entsprechend "Gleichheit".

Ergebnis:

Schritt 8: Mit C1 = "1" und C = " ↑ " bleibt das $\overline{Q}$-Ausgangssignal des JK-Flip-Flops 19 unverändert auf "1". Infolge des Endesignals E = "1" erscheint am Ausgang 21 des UND-Gliedes 20 ein Gültigsignal "1" mit der Bedeutung, dass der Suchschlüssel w in der Adresstabelle T des Speichers 7 vorhanden ist. Wegen R2 = "0" und M = "1" steht am Multiplexor-Ausgangsbus 6 unverändert das Signal $h(w) = 4$ an, welches die Position in der Adresstabelle T kennzeichnet. Die Adresstabelle T ist durch die Adress-Teiltabellen $T_0$, $T_1$ und $T_2$ im Speicher 7 repräsentiert. $T_0$, $T_1$ und $T_2$ bilden die Adresstabelle T in der gleichen Weise wie $w_0$, $w_1$ und $w_2$ den Suchschlüssel w darstellen, vgl. Fig. 2.

### Beispiel 2

Eingabe Suchschlüssel W: 398336

Zerlegung von w in $w_0$ ... $w_2$: $w_0 = 0$, $w_1 = 20$, $w_2 = 6$ Berechnung der Hasch-Funktion h(w):

$$
\begin{aligned}
h_{10}(w_0) &= h_{10}(0) = 0 \\
h_{11}(w_1) &= h_{11}(20) = 8 \\
h_{21}(w_2) &= h_{21}(6) = 2 \\
h_{20}(h_{11} + h_{10}) &= h_{20}(8) = 0 \\
h(w) = h_{21} + h_{20} &= 2
\end{aligned}
$$

Vergleich T(h(w)) = w:

$T_0(2) = 0 \quad T_1(2) = 20 \quad T_2(2) = 6 \Rightarrow T(h(w)) = 398336$

8

Ergebnis:
=> 398336 ist an Position 2 in der Adresstabelle 4.

Beispiel 3

Eingabe Suchschlüssel w: 398345
Zerlegung von w in $w_0 \ldots w_2$: $w_0 = 9$, $w_1 = 20$, $w_2 = 6$ Berechnung der Hasch-Funktion h(w):

$$
\begin{aligned}
h_{10}(w_0) &= h_{10}(9) = 1 \\
h_{11}(w_1) &= h_{11}(20) = 8 \\
h_{21}(w_2) &= h_{21}(6) = 2 \\
h_{20}(h_{11} + h_{10}) &= h_{20}(9) = 1 \\
h(w) = h_{21} + h_{20} &= 3
\end{aligned}
$$

Vergleich $T(h(w)) = w$:
$$T_0(3) = 9, \quad T_1(3) = 20, \quad T_2(3) \neq 6 \Rightarrow T(h(w)) \neq 398345$$

Ergebnis:
=> ist nicht in der Adresstabelle 4.

**Patentansprüche**

1. Suchverfahren zur Feststellung, ob ein vorgebbares Datum bzw. ein vorgebbarer Wert oder Suchschlüssel (w) in einem Speicher (7) vorhanden ist, wobei dieser Speicher (7) in einer Adresstabelle (T) abgelegte Werte bzw. Schlüssel (w) enthält, die darin gemäss einer perfekten Hasch-Funktion (h) angeordnet sind, für welche die Bedingung $T(h(w(i))) = w(i)$ gilt,
a) bei welchem Suchverfahren der auf Vorhandensein in der Adresstabelle (T) zu prüfende, eingebbare Suchschlüssel (w) unter Verwendung einer perfekten Hasch-Funktion (h) zum Vergleich mit einem Schlüssel (w) der Adresstabelle (T) herangezogen wird und
b) in Abhängigkeit vom Ergebnis des Vergleichs ein Gültigsignal (21 = "1") bzw. ein Ungültigsignal (21 = "0") erzeugt wird mit der Information, dass der Suchschlüssel (w) in der Adresstabelle (T) vorhanden bzw. nicht vorhanden ist,
dadurch gekennzeichnet,
c) dass jeder Suchschlüssel (w) in ein Polynom der Form

$$w = \sum_{i=0}^{k} w_i \, p^i, \quad \text{mit} \quad 0 \leqq w_i < p, \quad p \geqq m$$

zerlegt und in zerlegter Form, in mindestens einem Zwischenspeicher (1—3) gespeichert wird, i = Laufvariable, k deren Grösstwert, $w_i$ = Polynomkoeffizient, p = freie Variable, m = Anzahl der Suchschlüssel (w) in der Adresstabelle (T),
d) dass die Adresstabelle (T) Teiltabellen ($T_0, T_1, T_2, \ldots$) aufweist, die in dem Speicher (7) gespeichert sind, wobei jede Teiltabelle gemäss

$$T = \sum_{i=0}^{k} T_i \, p^i \quad \text{mit} \quad 0 \leqq T_i < p$$

gebildete Polynomkoeffizienten ($T_i$) mit gleicher Laufvariablen (i) enthält,
e) dass eine Hasch-Funktionstabelle (h) mit Teilfunktionen ($h_{ij}$) einer rekursiven Hasch-Function der Form

$$h(w) = h_i(w) = h_{i1}(w_i) + h_{i0}(h_{i-1}(w)) \qquad \text{(mod p)}$$

$$h_1(w) = h_{11}(w_1) + h_{10}(w_0)$$

in einem Speicher (7) abgespeichert ist,
f) dass für jeden Suchschlüssel (w) unter Verwendung der Hasch-Funktionstabelle (h) ausgehend von

$$h := h_{11}(w_1) + h_{10}(w_0),$$

für i: = 2 bis k $h := h_{i1}(w_i) + h_{i0}(h)$

schrittweise die Hasch-Funktion in einem Summierer (13) berechnet wird und
g) dass anschliessend der Suchschlüssel (w) mit demjenigen Datum der Adresstabelle (T), welches den Tabellenindex h(w) aufweist, in einem Vergleicher (17) wird.

2. Suchverfahren nach Anspruch 1, dadurch gekennzeichnet, dass die freie Variable p eine Potenz von 2 ist.

3. Suchverfahren nach Anspruch 1 oder 2, dadurch gekennzeichnet, dass der Vergleich des Suchschlüssels (w) mit dem Schlüssel (w) der Adresstabelle (T) an der Stelle h(w) gemäss

$$r: = ja$$
$$\text{für } i: = 0 \text{ bis } k \text{ bilde } r: = \wedge (w_i = T_i(h))$$

durchgeführt wird, mit der Bedeutung, dass der Wert w an der Stelle h in der Adresstabelle (T) enthalten ist, wenn nach der Durchführung r den logischen Wert "ja" aufweist, und dass der Wert w andernfalls nicht in der Adresstabelle (T) enthalten ist.

4. Adressenvergleichsschaltung zur Feststellung, ob ein vorgebbares Datum bzw. ein vorgebbarer Wert oder Suchschlüssel (w) in einem Speicher (7) vorhanden ist, wobei dieser Speicher (7) in einer Adresstabelle (T) abgelegte Werte bzw. Schlüssel (w) enthält, die darin gemäss einer perfekten Hasch-Funktion (h) angeordnet sind, für welche die Bedingung

$$T(h(w(i))) = w(i)$$

gilt, i = Laufvariable, dadurch gekennzeichnet,

a) dass der Speicher (7) eingangsseitig mit dem Ausgang mindestens eines Zwischenspeichers (1—3) zur Speicherung eines Suchschlüssels (w) oder eines Teils des Suchschlüssels ($w_0$, $w_1$, $w_2$ ...,) welcher dem Zwischenspeicher) eingangsseitg zugeführt ist, in Wirkverbindung steht, wobei jeder Teil des Suchschlüssels (w) ein Polynomkoeffizient ($w_i$) gemäss

$$w = \sum_{i=0}^{k} w_i \, p^i \quad \text{mit} \quad 0 \leq w_i < p, \; p \geq m$$

ist, k = Grösstwert von i, p = freie Variable, m = Anzahl der Suchschlüssel in der Adresstabelle,

b) dass die Adresstabelle (T) Teiltabellen ($T_0$, $T_1$, $T_2$, ...) aufweist, wobei jede Teiltabelle gemäss

$$T = \sum_{i=0}^{k} T_i \, p^i \quad \text{mit} \quad 0 \leq T_i < p$$

gebildete Polynomkoeffizienten ($T_i$) mit gleicher Laufvariablen (i) enthält,

c) dass eine Hasch-Funktionstabelle (h) mit Teilfunktionen ($h_{ij}$) einer rekursiven Hasch-Funktion der Form

$$h(w) = h_i(w) = h_{i1}(w_i) + h_{i0}(h_{i-1}(w)) \qquad \text{(mod p)}$$

$$h_1(w) = h_{11}(w_1) + h_{10}(w_0)$$

in einem Speicher (7) abgespeichert ist,

d) dass der Speicher (7) ferner über ein Summenregister (15) mit dem Ausgang eines Addiergliedes (13) in Wirkverbindung steht,

e) dass der Speicher (7) ausgangsseitig einerseits über ein Addendenregister (9) sowie andererseits direkt mit dem Summenregister (15) in Wirkverbindung steht, in dem, ausgehend von

$$h: = h_{11}(w_1) + h_{10}(w_0),$$

für i: = 2 bis k schrittweise die Hasch-Funktion

$$h: = h_{i1}(w_i) + h_{i0}(h)$$

berechnet wird,

f) dass ein Vergleicher (17) vorgesehen ist, der eingangsseitig über einen Eingang (12') einerseits mit dem Ausgang des Speichers (7) und über einen weiteren Eingang (12) andererseits mit dem Ausgang des mindestens einen Zwischenspeichers (1—3) und ausgangsseitig mit dem Eingang eines bistabilen Speichergleides (19) in Wirkverbindung steht, zum Vergleich des Suchschlüssels (w) mit demjenigen Datum der Adresstabelle (T), welches den Tabellenindex h(w) aufweist, und

g) dass der Speicher (7) eingangsseitig über Eingänge (A8—A10) mit einem Steuerwerk (22) in Wirkverbindung steht.

5. Adressenvergleichsschaltung nach Anspruch 4, dadurch gekennzeichnet, dass der Speicher (7)

EP 0 174 556 B1

eingangsseitig über einen Multiplexor (5) einerseits mit dem Summenregister (15) und andererseits mit mindestens einem Zwischenspeicher (1—3) in Wirkverbindung steht.

6. Adressenvergleichsschaltung nach Anspruch 4, oder 5, dadurch gekennzeichnet, dass das bistabile Speicherglied (19) ein flankengetriggertes JK-Flip-Flop mit Löscheingang ist, dessen J-Eingang mit dem Ausgang des Vergleichers (17) in Wirkverbindung steht.

7. Adressenvergleichsschaltung nach einem der Ansprüche 4 bis 6, dadurch gekennzeichnet, dass ein UND-Glied (20) vorgesehen ist, das eingangsseitig einerseits mit einem Ausgang des bistabilen Speichergliedes (19) und andererseits mit einem Endesignal-Ausgang (E) des Steuerwerkes (22) in Wirkverbindung steht und an dem ausgangsseitig in Abhängigkeit von den Eingangssignalen ein Gültigsignal (21 = "1") oder ein Ungültigsignal (21 = "0") abgreifbar ist, mit der Bedeutung, dass der Suchschlüssel (w) in einer im assoziativen Speicher (7) gespeicherten Adresstabelle (T) vorhanden bzw. nicht vorhanden ist.

8. Adressenvergleichsschaltung nach Anspruch 7, dadurch gekennzeichnet,

a) dass der mindestens eine Zwischenspeicher (1—3), das Addendenregister (9), das Summenregister (15), das bistabile Speicherglied (19) und der Multiplexor (22) von dem Steuerglied (22) in Abhängigkeit von vorgebbaren Steuerschritten (Tabelle 1) gesteuert sind und

b) dass am Ausgang (6) des Multiplexors (5) ein Tabellenindexsignal (h(w)) abgreifbar ist, das angibt, an welcher Stelle der Adresstabelle (T) ein dem Suchschlüssel (w) gleiches Datum gespeichert ist.

9. Adressenvergleichsschaltung nach einem der Ansprüche 4 bis 8, dadurch gekennzeichnet,

a) dass ein Speicher (7) mit einer Zugriffszeit von ≦ 50 ns verwendet wird und

b) dass die Adressenvergleichsschaltung schnelle AS-TTL-Beuelemente aufweist.

**Revendications**

1. Procédé de recherche pour déterminer si une donnée, une valeur ou une clé de recherche pouvant être donnée (w) est contenue dans une mémoire (7), cette mémoire (7) contenant, rangées dans une table d'adresses (T), des valeurs ou des clés qui sont disposées dans cette table d'adresses selon une fonction d'adressage calculé (ou "hash coding") parfaite (h) pour laquelle la condition $T(h(w(i))) = w(i)$ est satisfaite,

a) dans lequel procédé de recherche, la clé de recherche introduisible (w) dont la présence dans la table d'adresses (T) doit être vérifiée en utilisant une fonction d'adressage calculé parfaite (h) est employée pour comparaison à une clé (w) de la table d'adresses (T); et

b) en fonction du résultat de la comparaison, un signal de validité (21 = "1") ou de non-validité (21 = "0") est produit, avec l'information que la clé de recherche (w) est présente ou non présente, respectivement, dans la table d'adresses (T), caractérisé

c) en ce que chaque clé de recherche (w) est décomposée en un polynôme de la forme:

$$w = \sum_{i=0}^{k} w_i \, p^i, \text{ avec } 0 \le w_i < p, \; p \ge m$$

où i = variable progressive, k est sa plus grande valeur, $w_i$ = coefficient de polynôme, p = variable libre, m = nombre de clés de recherche (w) contenues dans la table d'adresse (T), et est mémorisée sous forme décomposée dans au moins une mémoire intermédiaire (1 à 3);

d) en ce que la table d'adresses (T) comprend des tables partielles ($T_0$, $T_1$, $T_2$, . . .) qui sont contenues dans la mémoire (7), chaque table partielle contenant les coefficients de polynôme ($T_i$) avec les mêmes variables progressives (i), formés selon l'expression:

$$T = \sum_{i=0}^{k} T_i \, p^i, \text{ avec } 0 \le T_i < p,$$

e) en ce qu'une table de fonctions d'adressage calculé (h) avec des fonctions partielles ($h_{ij}$) d'une fonction récursive d'adressage calculé de la forme:

$$h(w) = h_i(w) = h_{11}(w_i) = h_{10}(h_{i-1}(w)) \qquad \text{mod } p,$$

$$h_1(w) = h_{11}(w_1) + h_{10}(w_0)$$

est mémorisée dans une mémoire (7);

f) en ce que, pour chaque clé de recherche (w), en utilisant la table de fonctions d'adressage calculé (h) et en partant de:

$$h = h_{11}(w_1) + h_{10}(w_0),$$

11

pour i = 2 à k la fonction d'adressage calculé

$$h = h_{i1}(w_i) + h_{i0}(h)$$

est calculé pas à pas dans un additionneur (13); et

g) en ce qu'ensuite la clé de recherche (w) est comparée dans un comparateur (17) à la donnée de la table d'adresses (T) qui a l'indice de table h(w).

2. Procédé de recherche selon la revendication 1, caractérisé en ce que la variable libre p est une puissance de 2.

3. Procédé de recherche selon la revendication 1 ou 2, caractérisé en ce que la comparaison de la clé de recherche (w) est effectuée avec la clé (w) de la table d'adresses (T) à l'emplacement h(w) selon l'expression:

$$r = oui$$

$$\text{pour } i = 0 \text{ à } k, \text{ avec } r = r (w_i = T_i(h))$$

avec la signification que la valeur de w est contenue à l'emplacement h dans la table d'adresses (T) lorsqu'après l'exécution de la comparaison, r a la valeur logique "oui", et que dans le cas contraire, la valeur w n'est pas contenue dans la table d'adresses (T).

4. Circuit de comparaison d'adresses pour constater si une donnée, une valeur ou une clé de recherche pouvant être donnée (w) est contenue dans une mémoire (7), cette mémoire (7) contenant, rangées dans une table d'adresses (T), des valeurs ou des clés (w) qui sont disposées dans cette table selon une fonction d'adressage calculé parfaite (h) pour laquelle la condition:

$$T(h(w(i))) = w(i)$$

est satisfaite, avec i = variable progressive, caractérisé

a) en ce que la mémoire (7) est, en entrée, reliée fonctionellement à la sortie d'au moins une mémoire intermédiaire (1 à 3) pour mémoriser une clé de recherche (w) ou une partie de la clé de recherche ($w_0$, $w_1$, $w_2$, ...) qui est fournie en entrée à la mémoire intermédiaire (1 à ...), chaque partie de la clé de recherche (w) étant un coefficient de polynôme ($w_i$) formé selon l'expression:

$$w = \sum_{i=0}^{h} w_i \, p^i, \text{ avec } 0 \le w_i < p, \; p \ge m,$$

où k = valeur maximale de i, p = variable libre, et m = nombre de clés de recherche contenues dans la table d'adresses;

b) en ce que la table d'adresses (T) comprend des tables partielles ($T_0$, $T_1$, $T_2$, ...), chaque table partielle contenant des coefficients de polynôme ($T_i$) avec les mêmes variables progressives (i) formés selon l'expression:

$$T = \sum_{i=0}^{h} T_i \, p^i, \text{ avec } 0 \le T_i < p,$$

c) en ce qu'une table de fonctions d'adressage calculé (h) avec des fonctions partielles ($h_{ij}$) d'une fonction récursive d'adressage calculé de la forme

$$h(w) = h_i(w) = h_{i1}(w_i) + h_{i0}(h_{i-1}(w)) \qquad \text{(mod p)}$$

$$h_i(w) = h_{11}(w_1) + h_{10}(w_0)$$

est mémorisée dans une mémoire (7);

d) en ce que la mémoire (7) est en outre, par l'intermédiaire d'un registre de somme (15), reliée fonctionellement à la sortie d'un additionneur (13);

e) en ce que la mémoire (7) est, en sortie, reliée fonctionnellement, d'une part par l'intermédiaire d'un registre de terme d'addition (9) et, d'autre part directement, au registre de somme (15), dans lequel, en partant de

$$h = h_{11}(w_1) + h_{10}(w_0),$$

la fonction d'adressage calculé

$$h = h_{i1}(w_i) + h_{i0}(h)$$

est calculée pas à pas pour i = 2 à k;

f) en ce qu'il est prévu un comparateur (17) qui est relié fonctionnellement, en entrée, par l'intermédiaire de l'entrée (12'), d'une part à la sortie de la mémoire (7) et, par l'intermédiaire d'une autre entrée (12), d'autre part à la sortie d'au moins une mémoire intermédiaire (1 à 3), et en sortie, à une entrée d'un élément de mémoire bistable (19) pour comparer la clé de recherche (w) à la donnée de la table d'adresses (T) qui a l'indice de table h(w); et

g) en ce que la mémoire (7), en entrée, est reliée fonctionnellement, par l'intermédiaire d'entrées (A8 à A10), à une unité de commande (22).

5. Circuit de comparaison d'adresses selon la revendication 4, caractérisé en ce que la mémoire (7) est, en entrée, reliée fonctionnellement, par l'intermédiaire d'un multiplexeur (5), d'une part au registre de somme (15) et, d'autre part à au moins une mémoire intermédiaire (1 à 3).

6. Circuit de comparaison d'adresses selon la revendication 4 ou 5, caractérisé en ce que l'élément de mémoire bistable (19) est une bascule JK à déclenchement par flanc avec entrée de remise à zéro, dont l'entrée J est reliée fonctionnellement à la sortie du comparateur (17).

7. Circuit de comparaison d'adresses selon l'une des revendications 4 à 6, caractérisé en ce qu'un élément ET (20) est prévu qui, en entrée, est relié fonctionnellement, d'une part à une sortie de l'élément de mémoire bistable (19) et, d'autre part à une sortie de signal de fin (E) de l'unité de commande (22) et auquel, en sortie, en fonction des signaux d'entrée, un signal de validité (21 = "1") ou un signal de non-validité (21 = "0") est disponible, avec la signification que la clé de recherche (w) est présente ou non présente, respectivement, dans une table d'adresses (T) mémorisée dans le mémoire associative (7).

8. Circuit de comparaison d'adresses selon la revendication (7), caractérisé

a) en ce que la au moins une mémoire intermédiaire (1 à 3), le registre de terme d'addition (9), le registre de somme (15), l'élément de mémoire bistable (19) et le multiplexeur (5) sont commandés par l'unité de commande (22) en fonction de pas de commande pouvant être donnés; et

b) en ce qu'à la sortie (6) du multiplexeur (5), un signal d'indice de table (h(w)) est disponible qui indique à quel emplacement de la table d'adresses (T) une donnée égale à la clé de recherche (w) est mémorisée.

9. Circuit de comparaison d'adresses selon l'une des revendications 4 à 8, caractérise

a) en ce qu'une mémoire (7) à temps d'accès égal ou inférieur à 50 nanosecondes est employée; et

b) en ce que le circuit de comparaison d'adresses comporte des composants rapides TTL-AS.

**Claims**

1. Search method for determining whether a predeterminable data item or a predeterminable value or search key (w) exists in a memory (7), this memory (7) containing values or keys (w) stored in an address table (T) and arranged therein in accordance with a perfect hashing function for which the condition $T(h(w(i))) = w(i)$ holds true,

a) in which search method the search key (w), which can be entered and which is to be checked for its presence in the address table (T), is used for comparison with a key (w) of the address table (T), using a perfect hashing function (h), and

b) a valid signal (21 = "1") or an invalid signal (21 = "0") is generated, as a function of the result of the comparison, and containing the information that the search key (w) is present or not present in the address table (T), characterised

c) in that each search key (w) is resolved into a polynomial of the following form

$$w = \sum_{i=0}^{k} w_i\, p^i \quad \text{with} \quad 0 \le w_i < p \quad p \ge m$$

where i = control variable, k its maximum value, $w_i$ = polynomial coefficient, p = free variable, m = number of search keys (w) in the address table (T), and is stored in resolved form in at least one temporary memory (1—3),

d) in that the address table (T) has sub-tables ($T_0$, $T_1$, $T_2$ . . .), which are stored in the memory (7) in which arrangement each sub-table contains polynomial coefficients ($T_1$), having the same control variable (i), which are formed in accordance with

$$T = \sum_{i=0}^{k} T_i\, p^i \quad \text{with} \quad 0 \le T_i < p$$

e) in that a hashing function table (h) with subfunctions ($h_{ij}$) of a recursive hashing function of the following form

$$h(w) = h_i(w) = h_{i1}(w_i) + h_{i0}(h_{i-1}(w)) \qquad (\text{mod } p),$$

$$h_1(w) = h_{11}(w_1) + h_{10}(w_0)$$

is stored in a memory (7)

f) in that for each search key (w) the housing function is calculated step-by-step in an adder (13) starting from

$$h: = h_{11}(w_1) + h_{10}(w_0),$$

$$\text{for } i: = 2 \text{ to } k \; h: = h_{i1}(w_i) + h_{i0}(h),$$

by using the hashing function table, (h), and

g) in that subsequently the search key (w) is compared in a comparator (17) with the data item address table (T) having the tabel index h(w).

2. Search method according to Claim 1, characterised in that the free variable p is a power of 2.

3. Search method according to Claim 1 or 2, characterised in that the comparison of the search key (w) with the key (w) of the address table (T) at position h(w) is carried out in accordance with

$$r: = \text{yes}$$
$$\text{for } i: = 0 \text{ to } k \text{ form } r: = \wedge (w_i = T_i(h)),$$

having the meaning that the value w is contained at position h in address table (T) if after execution, r has the logical value "yes" and that the value w is not contained in the address table (T) in other cases.

4. Address compare circuit for determining whether a predeterminable data item or a predeterminable value or search key (w) exists in a memory (7), this memory (7) containing values or keys (w) stored in an address table (T) and arranged therein in accordance with a perfect hashing function (h), for which the condition $T(h(w(i))) = w(i)$ holds true, where i = control variable, characterised in that

a) the input of the memory (7) is effectively connected to the output of at least one temporary memory (1—3) for storing a search key (w) or a part of the search key ($w_0, w_1, w_2 \ldots$) which is supplied to the input of the temporary memory, each part of the search key (w) being a polynomial coefficient ($w_i$) in accordance with

$$w = \sum_{i=0}^{h} w_i \, p^i, \quad \text{with} \quad 0 \leq w_i < p, \; p \geq m$$

k = maximum value of i, P = free variable, m = no. of search keys in the address table,

b) in that the address table (T) has sub-tables — $T_0, T_1, T_2, \ldots$), each sub-table containing polynomial coefficients ($T_i$) with the same control variable (i), which are formed in accordance with

$$T = \sum_{i=0}^{h} T_i \, p^i \quad \text{with} \quad 0 \leq T_i < p$$

c) in that a hashing function table (h) with sub-functions ($h_{ij}$) of a recursive hashing function of the form

$$h(w) = h_i(w) = h_{i1}(w_i) + h_{i0}(h_{i-1}(w)) \qquad (\text{mod } p)$$

$$h_1(w) = h_{11}(w_1) + h_{10}(w_0)$$

is stored in a memory (7),

d) in that the memory (7) is also effectively connected via a sum register (15) to the output of an adder (13),

e) in that the output of the memory (7) is effectively connected, on the one hand, via an addend register (9) and, on the other hand, directly to the sum register (15) in which the hashing function

$$h: = h_{i1}(w_1) + h_{10}(w_0)$$

is calculated step-by-step for i: = 2 to k, starting with

$$h: = h_{11}(w_1) + h_{10}(w_0),$$

f) in that a comparator (17) is provided the input of which is effectively connected, on the one hand, via an input 12' to the output of the memory (7) and, on the other hand, via a further input (12) of the output of the at least one temporary memory (1—3) and the output of which is effectively connected to the input of a bistable memory element (19), for comparing the search key (w) with the address table (T) data item which exhibits the table index h(w), and

g) in that the input of the memory (7) is effectively connected via inputs (A8—A10) to a control unit (22).

5. Address compare circuit according to Claim 4, characterised in that the memory (7) is effectively connected at its input via a multiplexer (5) to the sum register (15), on the one hand, and, on the other hand, to at least one temporary memory (1—3).

6. Address compare circuit according to Claim 4 or 5, characterised in that the bistable memory element (19) is an edge-triggered JK-type flip-flop with clear input, the J input of which is effectively connected to the output of the comparator (17).

7. Address compare circuit according to one of Claims 4 to 6, characterised in that an AND gate (20) is provided which is effectively connected at its input to an output of the bistable memory element (19), on the one hand, and, on the other hand, to an end signal output (E) of the control unit (22) and at the output of which AND gate a valid signal (21 = "1") or an invalid signal (21 = "0") can be picked up as function of the input signals, having the meaning that the search key (w) is present or not present, respectively, in an address table (T) stored in the associative memory (7).

8. Address compare circuit according to Claim 7, characterised

a) in that the at least one temporary memory (1—3), the addend register (9), the sum register (15), the bistable memory element (19) and the multiplexer (22) are controlled by the control element (22) as a function of predeterminable control steps (Table 1), and

b) in that at the output (6) of the multiplexer (5), a table index signal (h(w)) can be picked up which specifies at which position in the address table (T) a data item equal to the search key (w) is stored.

9. Address compare circuit according to one of Claims 4 to 8, characterised

a) in that a memory (7) having an access time of ≤ 50 ns is used, and

b) in that the address compare circuit is provided with fast AS-TTL components.

FIG.1

FIG.2

FIG.3

Vorgabe von W, m, k, p
i := 1

Bestimme wh1, who (FIG.5)

Sortiere wh1, whO, so daß gilt
wh1(j)·p+whO(j) ≥ wh1(j-1)p+whO(j-1)

Bestimme $h_{io}$ (FIG.6)

Bestimme $h_{i1}$ (FIG.7)

i := i +1

ja

i ≤ k

nein

j := 0

jj := $w_O(j)$, i := 1

i ≤ k

nein

ja

jj := $h_{i1}(w_i(j)) + h_{io}(jj)$, i := i +1

i := 0

j := 0

jj := $w_O(j)$
x := 1

x < i

nein

ja

jj := $h_{x1}(w_x(j)) + h_{xo}(jj)$
x := x +1

wh1(j) := $w_i(j)$

whO(j) := jj

j := j +1

ja

j ≤ m

nein

**FIG.5**

$T_i(jj)$ := $w_i(j)$, i := i +1

ja

i ≤ k

nein

j := j +1

ja

j ≤ m

nein

**FIG.4**

FIG. 6

$j := 0$

$h_{i1}(j) \quad := 0$
$j \quad := j + 1$

ja — $j < p$

nein

$h1 := 0$
$whL := wh1(o)$
$min := h_{io}(whO(o))$
$max := min$
$j := 0$

$whL = wh1(j)$ — ja

nein

$h_{i1}(whL) := h1 - min$
$h1 := h1 - min + max + 1$
$whL := wh1(j)$
$min := h_{io}(whO(j))$
$max := min$

$j := j + 1$

nein — $j > m$

ja

$h_{i1}(whL) := h1 - min$

nein — $h_{io}(whO(j)) < min$

ja

$min := h_{io}(whO(j))$

nein — $h_{io}(whO(j)) > max$

ja

$max := h_{io}(whO(j))$

FIG. 7

4